# EUROPÄISCHE PATENTSCHRIFT

(11) **EP 1 093 876 B1**
(45) Veröffentlichungstag und Bekanntmachung des Hinweises auf die Patenterteilung: **13.04.2005**
(21) Anmeldenummer: 00120054.2
(22) Anmeldetag: 15.09.2000
(51) Int. Cl.: B23C 5/10

(54) **Schneideinsatz und Kugelkopffräser**
Cutting insert and ball end mill
Plaquette de coupe et fraise sphérique à queue

(30) Priorität: 22.10.1999 DE 19951186
(43) Veröffentlichungstag der Anmeldung: 25.04.2001
(73) Patentinhaber: Widia GmbH, 45145 Essen (DE)
(72) Erfinder: Heinloth, Markus, 92353 Postbauer-Heng (DE)
(74) Vertreter: Vomberg, Friedhelm, Dipl.-Phys.

(56) Entgegenhaltungen:
- EP-A- 0 307 949
- EP-A- 0 361 435
- US-A- 4 566 827
- US-A- 4 618 296
- PATENT ABSTRACTS OF JAPAN vol. 1998, no. 2, 30. Januar 1998 (1998-01-30) & JP 09 262715 A (MITSUBISHI MATERIALS), 7. Oktober 1997 (1997-10-07)

## Beschreibung

Die Erfindung betrifft einen Schneideinsatz mit drei effektiv nutzbaren, eine Spanfläche begrenzenden Schneidkanten, jeweiligen Freiflächen und einer Auflagefläche.

Die Erfindung betrifft ferner einen Kugelkopffräser mit einem einen Schaft aufweisenden Werkzeugträger mit mehreren Plattensitzen zur Aufnahme und Befestigung jeweiliger Schneideinsätze, die an dem Werkzeugträger derart angeordnet sind, daß sie bei Drehung des Werkzeugträgers um seine Längsachse mit ihren aktiven Schneidkanten eine Rotationsfläche beschreiben, die einer Halbkugelfläche und einer hieran angrenzenden, den Fräsdurchmesser bestimmenden Zylinderfläche entspricht, wobei sich die von den Schneidkanten benachbarter Schneideinsätze beschriebenen Zerspanungsflächen teilweise überlappen.

Kugelkopffräser der genannten Art werden insbesondere für den Formen- und Gesenkbau für Schrupparbeiten benötigt. Um die Halbkugelform mit angrenzender Zylindermantelfläche ausfräsen zu können, werden Kugelkopffräser mit zwei oder mehr Schneideinsätzen eingesetzt. Allen diesen Fräsern ist gemeinsam, daß zumindest zwei verschiedene Schneidplattensorten benötigt werden, was eine entsprechende Lagerhaltung mit diversen Schneideinsätzen erfordert. Soweit nur einheitliche Schneideinsätze verwendet werden, sind nachteiligerweise lange Schneidkanten in Kauf zu nehmen, die zu einer ungünstigen Spanbildung führen.

So ist beispielsweise aus der EP 0 307 047 A1 ein Kugelkopffräser bekannt, der auf gegenüberliegenden Seiten aus jeweils drei Wendeschneidplatten bestehende Reihen von Schneideinsätzen besitzt, die S-förmig am Werkzeugträger angeordnet sein sollen. Auf jeder Seite des Werkzeugträgers werden zwei verschiedene Schneideinsätze eingesetzt, nämlich ein erster, zur Bildung einer Teilkugelform benötigter dreieckiger Schneideinsatz mit drei gleichmäßig konvex nach außen gebogenen Schneiden und zur Erzeugung des Fräsdurchmessermantels ein viereckiger Schneideinsatz. Die jeweiligen Schneideinsätze sind gegenüber den Schneideinsätzen auf der gegenüberliegenden Seite des Werkzeugschaftes versetzt angeordnet, so daß sich die Schneidbereiche der Werkzeuge nur teilweise überlappen. Auf jedem dieser Schneideinsätze lastet beim Fräsen ein hohen Schnittdruck, der leicht zu Schneidkantenausbrüchen führen kann.

In diesem Dokument wird auch auf eine Ausführungsform verwiesen, bei der entsprechend einem Vorschlag in der US 4 252 480 Schneideinsätze verwendet werden sollen, die jeweils zwei Schneidkanten besitzen, welche sich aus einem bogenförmigen und einen Winkelbereich 45° überdeckenden Teil und einem geraden Schneidkantenteil zusammensetzen. Bei diesen Schneideinsätzen muß jede der langen Schneidkanten die volle Schneidarbeit leisten, wodurch ein hoher Schnittwiderstand entsteht.

Ein ähnlicher Schneideinsatz ist auch aus der WO 95/17284 bekannt, der sich von dem vorgenannten Schneideinsatz nur dadurch unterscheidet, daß der gerade, effektiv nutzbare Schneidkantenteil verkürzt ausgebildet ist.

Die WO 98/07540 beschreibt einen Schneideinsatz, der jeweils oben wie unten eine konvex gekrümmte Schneidkante besitzt, die jedoch pro Spanfläche die einzig nutzbare Schneidkante ist.

Es ist Aufgabe der vorliegenden Erfindung, einen Schneideinsatz für den Einsatz in einem Kugelkopffräser zu schaffen, der relativ kurz aktiv nutzbare Schneidkante besitzt und der einheitlich in dem eingangs genannten Werkzeug verwendet werden kann. Ferner ist es Aufgabe der Erfindung, einen Kugelkopffräser der eingangs genannten Art zu schaffen, bei dem die Schnittarbeit auf mehr als zwei Schneideinsätze verteilt wird und der mit ein und demselben Typ von Schneideinsätzen bestückt werden kann. Der Kugelkopffräser soll einfach handhabbar sein.

Die vorgenannte Aufgabe wird zum einen durch den Schneideinsatz nach Anspruch 1 gelöst, der dadurch gekennzeichnet ist, daß zwei der Schneidkanten über ihre in Draufsicht auf die Spanfläche betrachteten Länge konvex gewölbt sind und die dritte Schneidkante in Draufsicht auf die Spanfläche betrachtet geradlinig ausgebildet ist. Durch diese einfache Maßnahme wird erreicht, daß dieser Schneideinsatz im halbkugelförmigen Zerspanungsbereich mit der gekrümmten Schneidkante als aktiver Schneidkante und im Zylindermantelbereich mit der geraden Schneidkante eingesetzt werden kann. Zudem liefert die gerade Schneidkante, die bei Einsatz der gekrümmten Schneidkanten als aktive Schneidkanten als Anlagefläche dienen kann, eine bessere Halterung des Schneideinsatzes in dem durch hohe Zerspanungskräfte beanspruchten Kugelbereich.

Weiterbildungen der Erfindung sind in den Unteransprüchen beschrieben.

So weisen vorzugsweise die konvexen Schneidkanten über ihre gesamte effektive Länge einen gleich großen Krümmungsradius auf. Von diesem gleich großen Krümmungsradius sind lediglich die Schneideckenbereiche ausgenommen. Die Länge der gekrümmten Schneidkanten entspricht einem Winkelmaß von 40° bis 52°, vorzugsweise bis 48°, bzw. einem Bogenmaß zwischen π · D/7 bis π · D/9 (D = Kugelkopfdurchmesser).

Nach einer weiteren Ausgestaltung der Erfindung sind die beiden gekrümmten Schneidkanten eines Schneideinsatzes unterschiedlich lang, wobei vorzugsweise die kürzere Schneidkante einem Winkelmaß von 45° entspricht und/oder die längere Schneidkante einem Winkelmaß von 48°.

Aus Stabilisierungsgründen wird nach einer weiteren Ausgestaltung der Erfindung eine umlaufende Fase vorgesehen, die vorzugsweise unter einem Winkel von 0° bis 20° zur Spanflächenebene geneigt ist und/oder eine Breite zwischen 0,05 mm und 0,25 mm besitzt.

Zusätzlich können die Schneidkanten in einer Draufsicht auf die Freifläche betrachtet zu den Schneideinsatzecken hin abfallen, vorzugsweise unter einem gegenüber der Basisfläche gemessenen tangentialen Neigungswinkel γ von bis zu 40°. Ein solcher Krümmungsverlauf der Schneidkanten ergibt sich aus der Überlegung bzw. Anforderung, daß ein im Zentrum eines Kugelkopffräsers eingebauter Schneideinsatz mit seiner Schneidkante im Zentrum untermittig angeordnet sein soll und gleichzeitig ein maximal möglicher Abstand dieses zentral angeordneten Schneideinsatzes zum auf derselben Seite des Kugelkopffräser-Werkzeugträgers liegenden benachbarten Schneideinsatzes geschaffen ist. Dies wird erreicht, indem die konvex gebogenen Schneidkanten zur Schneidkantenecke hin abfallen. Der Bereich, über den die Schneidkante zu den Schneideinsatzecken hin abfällt, beträgt vorzugsweise 1/3 bis 1/9 der Schneidkantenbreite. Die Schneidkante verläuft zumindest an ihren Enden, d.h. in dem obengenannten Bereich in einer Draufsicht auf die Freifläche betrachtet konvex gekrümmt, wobei der Krümmungsradius zwischen 1 mm und 8 mm liegt.

Weiterhin besitzt die Spanfläche ein zentral angeordnetes erhabenes Plateau, wobei vorzugsweise die an die Schneidkanten angrenzenden Spanflächenbereiche in Richtung auf das zentrale Plateau als konkave Anstiegsflanken ausgebildet sind. Hierdurch wird ein optimaler Spanabfluß gewährleistet, bei dem die Späne nach oben gebogen und kurz gebrochen werden.

Nach einer weiteren Ausgestaltung der Erfindung folgen die Grenzlinien des mittleren erhabenen Plateaus im wesentlichen dem Verlauf der Schneidkanten bzw. laufen zu ihnen parallel.

Die Freifläche kann entweder eben oder in mehrere Freiflächenbereiche aufgeteilt sein, von denen jeder jeweils einen stumpfen Winkel mit dem benachbarten Bereich einschließt, wobei der an die Schneidkante angrenzende Freiflächenbereich im Vergleich zu den übrigen, darunterliegenden Bereichen den kleinsten Freiwinkel zwischen 5° und 25°, vorzugsweise zwischen 10° und 15° aufweist. Durch diese Maßnahme kann die Schneidkante stabilisiert und gleichzeitig ein "Aufsetzen" der unteren Freiflächenbereiche, die benachbart zur Auflagefläche liegen, vermieden werden. Die Höhe des an die Schneidkante angrenzenden Freiflächenbereiches mit dem kleinsten Winkel beträgt mindestens ein Fünftel der Gesamthöhe des Schneideinsatzes. Vorzugsweise ist zumindest der sich an die Schneidkante anschließende Bereich der Freifläche im Querschnitt rund ausgebildet, wobei der Radius der Krümmung (senkrecht zur Schneidkante) gleich groß dem Radius des Kreises ist, den der oberhalb dieses Freiflächenbereiches angeordnete Schneidkantenpunkt im eingebauten Zustand des Schneideinsatzes im Werkzeugträger beim Zerspanen beschreibt, wobei vorzugsweise der tangentiale Freiflächenwinkel an der Schneidkante zwischen 5° und 20° liegt.

Nach einer weiteren Ausgestaltung der Erfindung ist zumindest ein im Abstand von der Schneidkante angeordneter Teilbereich der Freifläche eben ausgebildet und als Anlagefläche zu einer korrespondierenden Anlagefläche der Ausnehmung des Werkzeugträgers ausgestaltet. Hiermit wird dem Umstand Rechnung getragen, daß die Anlage einer nicht ebenen Freifläche in einem Plattensitz eines Werkzeugträgers eine in der Praxis nicht immer erfüllbare Fertigungsgenauigkeit erfordert. Aus diesem Grund wird ein deutlich unterhalb der Schneidkante liegender Freiflächenbereich eben ausgestaltet, wobei dieser ebene Freiflächenbereich nicht zwingend bis zu dem Schneideinsatz-Eckbereich reichen muß, sondern im Abstand hiervon in die rund ausgebildete Freifläche auslaufen kann. Zwischen dieser Freiflächenbereichs-Ebene und den sphärisch-rund ausgestalteten Freiflächenbereichen können noch Übergangsbereiche vorgesehen sein.

Erfindungsgemäß besitzt der Kugelkopffräser auf gegenüberliegenden Seiten des Werkzeugträgers jeweils drei in einer Reihe nebeneinander angeordnete Schneideinsätze, von denen zwei nebeneinanderliegende Schneideinsätze jeweils eine aktive in Draufsicht auf deren Spanfläche betrachtet gleichmäßig gekrümmte Schneidkante besitzen, die einen Winkel zwischen 40° und 52° abdecken. Der dritte neben diesen beiden Schneideinsätzen angeordnete Schneideinsatz besitzt eine aktive gerade Schneidkante.

Nach einer bevorzugten Ausgestaltung sind die Schneideinsätze unter einem Axialwinkel von 0° bis 15° angeordnet, wobei vorzugsweise der an der Werkzeugspitze angeordnete Schneideinsatz bevorzugt unter einem Axialwinkel bis zu 10° angeordnet sein soll.

Wie grundsätzlich nach dem Stand der Technik bekannt, steht nach einer bevorzugten Ausführungsform der Erfindung einer der an der Werkzeugspitze angeordneten Schneideinsätze mit seiner Schneidkante geringfügig über die Fräserlängsachse hinausgehend über, wobei der auf der gegenüberliegenden Seite liegende Schneideinsatz an der Werkzeugspitze einen entsprechend geringfügigen Abstand zur Fräserlängsachse hat.

Wie bereits erwähnt, sollen in dem Kugelkopffräser die vorbeschriebenen Schneideinsätze verwendet werden, wobei vorzugsweise in dem kugelförmigen Bereich auf der einen Seite Schneideinsätze mit den jeweils längeren der gekrümmten Schneidkanten eingespannt sind und auf der anderen Seite jeweils Schneideinsätze mit den kürzeren gekrümmten Schneiden. Hierdurch wird es möglich, daß der an der Werkzeugspitze befindliche Schneideinsatz mit der längeren Schneidkante geringfügig über die Werkzeuglängsachse übersteht. Wie bereits vorstehend erwähnt, soll das Schneidkantenende, mit dem der zentral angeordnete Schneideinsatz geringfügig über die Fräserlängsachse hinausragt, untermittig liegen, d.h., daß ein Abstand zu der Ebene, in der der vorderste Punkt der Schneidkante dieses zentral angeordneten Schneideinsatzes liegt und den senkrecht zur Fräserlängsachse angeordnet ist, geschaffen wird. Dieser Abstand durch entsprechend abfallende Schneidkantenausgestaltung zur Schneideinsatzecke hin beträgt bis zu 0,3 mm.

Der Bereich, mit dem sich die Zerspanungsflächen benachbarter Schneideinsätze bei Rotation des Kugelkopffräsers überlappen, wird bis zu 0,3 mm gewählt.

Weiterhin wird in einer vorzugsweisen Ausführungsform der Erfindung der Abstand, den die Auflagefläche des zentralen Schneideinsatzes von der hierzu parallelen Ebene hat, in der der nächstliegende Schneidkantenpunkt der seitlich benachbarten Schneidplatte auf derselben Seite des Kugelkopffräsers liegt, mit mindestens 1 mm gewählt.

Schließlich sind die durch die aktiven Schneidkanten bestimmten Schnittebenen der zentral angeordneten Schneideinsätze zu den Schnittebenen der benachbart liegenden Schneideinsätze um einen Raumwinkel zueinander geneigt. Dieser Raumwinkel beträgt bezüglich der Schnittebene der zentralen Schneideinsätze zu der Schnittebene des seitlich benachbarten Schneideinsatzes bis zu 50° und zu der Schnittebene des übernächsten Schneideinsatzes 40° bis 100°. Durch diese Maßnahme wird eine optimierte Schnittdruckverteilung auf die Schneideinsätze des Kugelkopffräsers bzw. auf die Plattensitze erreicht. Mit Ausnahme der geschilderten durch die Verwendung von längeren Schneidkanten auf der einen und den kürzeren Schneidkanten auf der anderen Seite bedingten Versetzung der auf zwei Seiten in Reihe angeordneten Schneideinsätze sind jeweils gegenüberliegende Schneideinsätze im wesentlichen symmetrisch angeordnet, d.h., sie beschreiben ein und dieselbe Schneidbahn, die einem Winkelbogenmaß von 40° bis maximal 52° entspricht. Hierdurch wird der Schnittdruck klein gehalten, ferner werden breite Späne, die schwer abführbar sind, vermieden.

Ausführungsbeispiele der Erfindung sind in den Zeichnungen dargestellt. Es zeigen
- Fig. 1: eine in eine Ebene projizierte skizzenartige Ansicht eines Längsschnittes eines Kugelkopffräsers,
- Fig. 2: eine skizzenartige Seitenansicht des Kugelkopffräsers,
- Fig. 3 und 4: jeweils perspektivische Ansichten eines erfindungsgemäßen Kugelkopffräsers,
- Fig. 5: eine Draufsicht auf die Stirnseite des Kugelkopffräsers nach Fig. 3 und 4,
- Fig. 6: Darstellung der räumlichen Lage zweier Schneideinsätze in bezug auf die Fräserlängsachse,
- Fig. 7 bis 9: jeweils perspektivische Ansichten des erfindungsgemäßen Schneideinsatzes,
- Fig. 10: eine Seitenansicht eines erfindungsgemäßen Schneideinsatzes,
- Fig. 11: eine perspektivische Ansicht eines Schneideinsatzes mit einer Darstellung der Freiflächenkrümmung und
- Fig. 12: eine schematische Konstruktionsansicht zur Ermittlung der Freiflächenkrümmung.

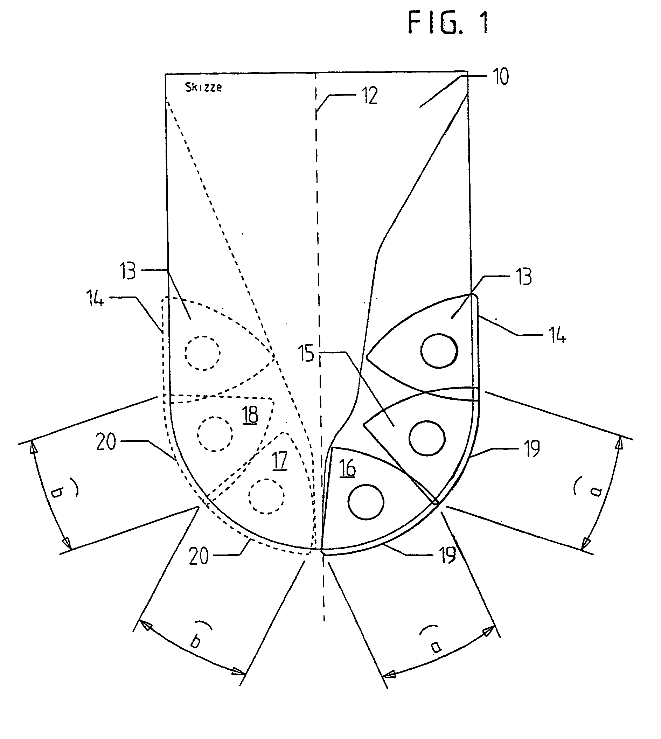

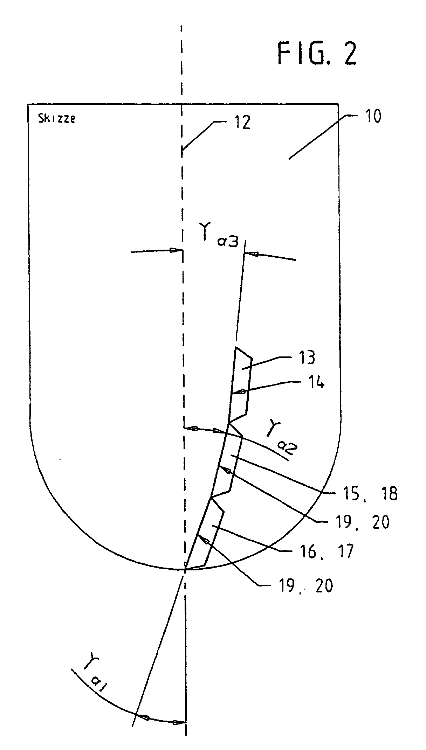

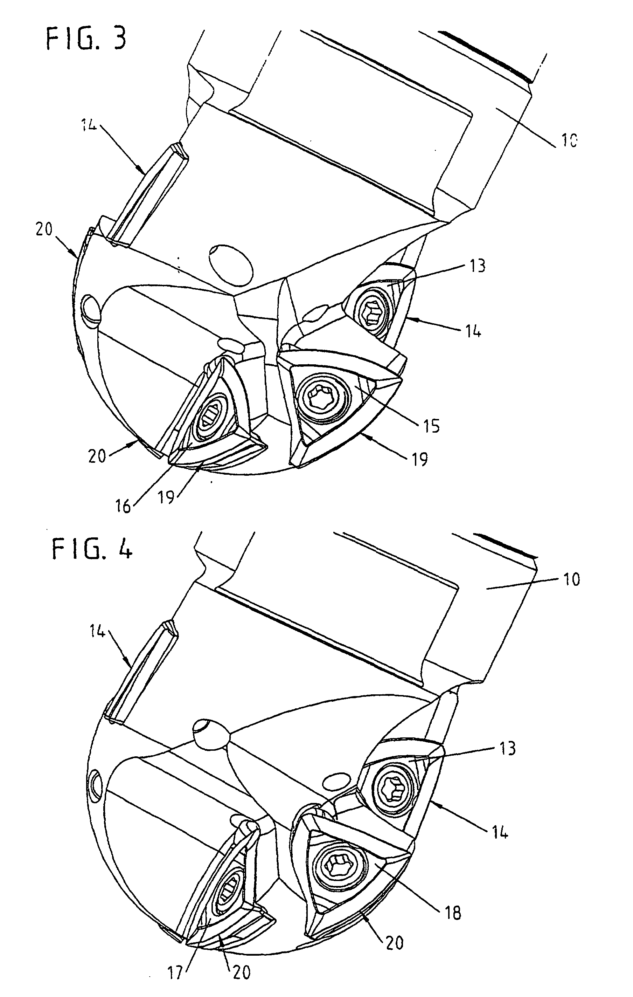

Der in Fig. 1 bis 5 dargestellte Kugelkopffräser besteht aus einem Werkzeugträger 10 mit als Plattensitzen dienenden Ausnehmungen, in die Wendeschneidplatten 13, 15, 16, 17 und 18 eingesetzt und mittels einer durch ein Befestigungsloch durchgreifenden Klemmschraube fixiert werden. Erfindungsgemäß werden bei dem dargestellten Kugelkopffräser sechs Wendeschneidplatten 13, 15, 16, 17 und 18 ein und desselben Typs verwendet. Die Wendeschneidplatten beschreiben bei Drehung des Kugelkopffräsers um seine Längsachse 12 Rotationsbahnen, die einen im Werkstück geschaffenen Hohlraum erzeugen, der als Halbkugel mit einem hieran anschließenden Zylinderraum vorstellbar ist. Hierbei dienen die auf gegenüberliegenden Seiten des Werkzeugträgers 10 liegenden Schneideinsätze 13 mit ihren aktiven gerade verlaufenden Schneidkanten 14 zur spanenden Bearbeitung des den Durchmesser des Fräsloches bestimmenden Zylindermantel, wohingegen die Schneideinsätze 15 bis 18 mit gleichmäßig gekrümmt ausgebildeten Schneiden 19 und 20 das Halbkugelprofil schneiden. Die Zerspanungsbereiche benachbart liegender Schneideinsätze überlappen sich hierbei geringfügig um bis zu 0,3 mm. Die Schneideinsätze 13, 15 und 16 auf der einen Seite und 13, 17, 18 auf der anderen Seite bilden jeweils eine Reihe von gestaffelt angeordneten Schneideinsätzen (siehe Fig. 2 bis 5), die unter einem Axialwinkel γₐ₁ von 0° bis 10° (für Schneideinsätze 16, 17) bzw. Axialwinkeln γₐ₂ und γₐ₃ von 0° bis 15° (für Schneideinsätze 13, 15 und 18) im Werkzeugträger angeordnet sind. Vorzugsweise sind die Axialwinkel γₐ₂ und γₐ₃ gleich groß, aber größer als γₐ₁.

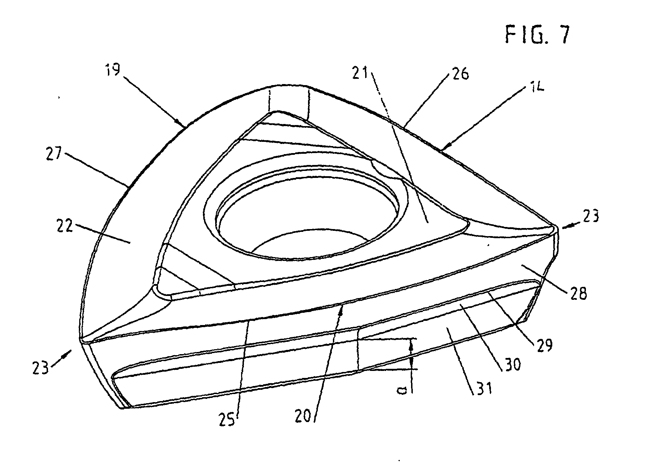

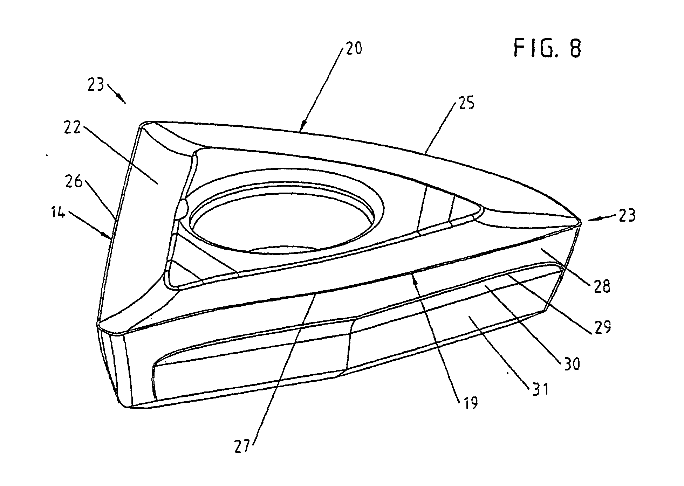

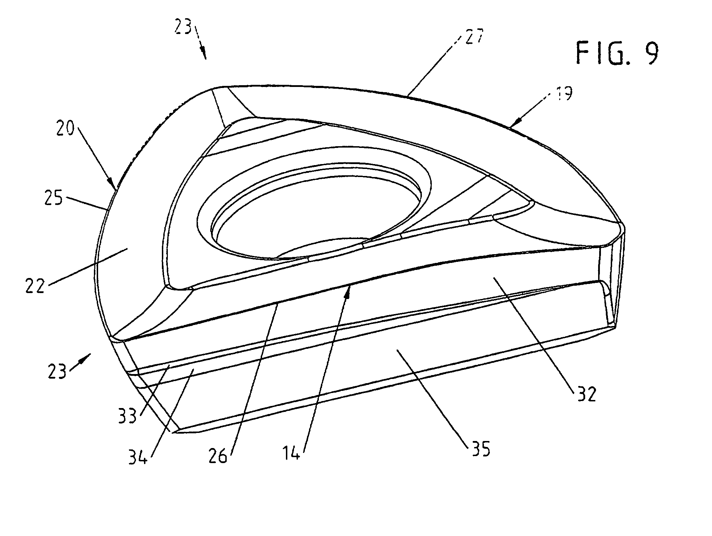

Die geometrische Form der Schneideinsätze ist aus Fig. 7 bis 11 ersichtlich. Die Schneiden 19 und 20, die beide gleichmäßig konvex gekrümmt ausgebildet sind, sind vorzugsweise unterschiedlich lang, d.h., der Kreisbogen ä ist geringfügig größer als der Kreisbogen b (siehe Fig. 1). Durch entsprechende Plattensitze wird gewährleistet, daß der an der Werkzeugspitze angeordnete Schneideinsatz 16 mit seiner aktiven Schneide 19 geringfügig über die Längsachse 12 des Werkzeuges übersteht. Der Schneideinsatz 17 mit seiner geringfügig kürzeren Schneide ist um ein entsprechendes Maß zur Werkzeuglängsachse 12 beabstandet.

Die durch die Schneide 19 bearbeitete Werkstück-Teilkreisfläche entspricht einem Winkelmaß von 48°, wohingegen das entsprechende Winkelmaß bezüglich der Schneide 20 45° beträgt.

Die Fig. 7 bis 11 zeigen, daß der verwendete Schneideinsatz eine geradlinig ausgebildete Schneidkante und zwei gleichmäßig gekrümmte, aber unterschiedlich lange Schneidkanten besitzt. Durch diese Ausgestaltung kann ein und derselbe Schneideinsatz nach entsprechender Ausrichtung in der Position der Schneideinsätze 13 oder 15 bis 18 verwendet werden. Im Gegensatz zu nach dem Stand der Technik bekannten Ausführungsformen vereinfacht dies die Lagerhaltung, da der Lagerbestand entsprechend reduziert und das Handling mit den Schneideinsätzen vereinfacht werden kann.

Der Schneideinsatz nach Fig. 7 bis 11 besitzt ferner ein mittleres erhabenes Plateau 21. Die an die Schneidkanten 14, 19 und 20 angrenzenden Spanflächenbereiche 22 sind konkav als Anstiegsflanken ausgebildet. Die Schneideinsätze besitzen eine umlaufende Fase 25, 26 und 27, die unter einem Winkel von bis zu 20° geneigt ist.

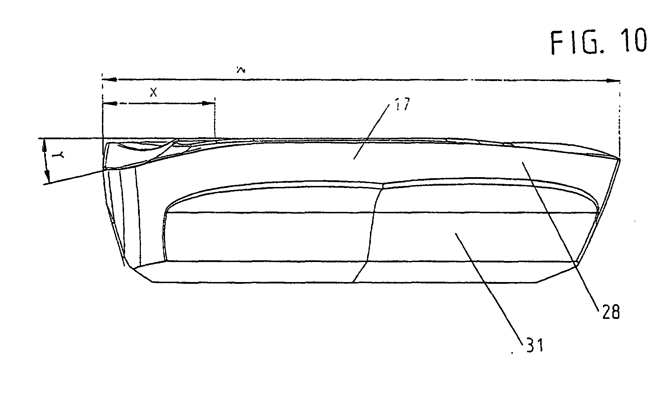

Vorzugsweise ist die Freifläche, die unterhalb der Schneidkanten 14, 19 und 20 liegt, nicht eben ausgebildet, sondern in verschiedene Bereiche aufgeteilt. Wie aus Fig. 7 und 10 ersichtlich ist, liegen unterhalb der gekrümmt ausgebildeten Schneidkanten 19 und 20 ein erster Freiflächenbereich 28, der dem gewünschten Freiwinkel in Einbaulage entsprechend ausgestaltet ist und dem sich Teilbereiche 29 bis 31 anschließen, wovon der Teilbereich 31 bzw. jeder der nebeneinanderliegenden Teilbereiche mit einer Höhe a unter einem größeren Freiwinkel geneigt und eben ausgestaltet ist und als Anlagefläche im Werkzeugträger dient. Entsprechendes gilt für den Teilbereich 35, der unterhalb der Schneidkante 14 bzw. unterhalb der Teilbereiche 32 bis 34 liegt.

Das geschaffene Maß der Schneidkantenabsenkung ergibt sich im einzelnen aus Fig. 10. In dem dort dargestellten Bereich x, der etwa 1/3 bis 1/9 der Breite w, über die sich die Schneidkante erstreckt, beträgt, ist die Schneidkante zu einer durch die Auflagefläche bzw. einer parallelen hierzu definierten Ebene um einen tangential gemessenen Winkel γ geneigt. Die Kontur der Schneidkante im Bereich x bzw. im Übergangsbereich zur Schneidkantenmitte besitzt einen Krümmungsradius von 1 mm bis 8 mm.

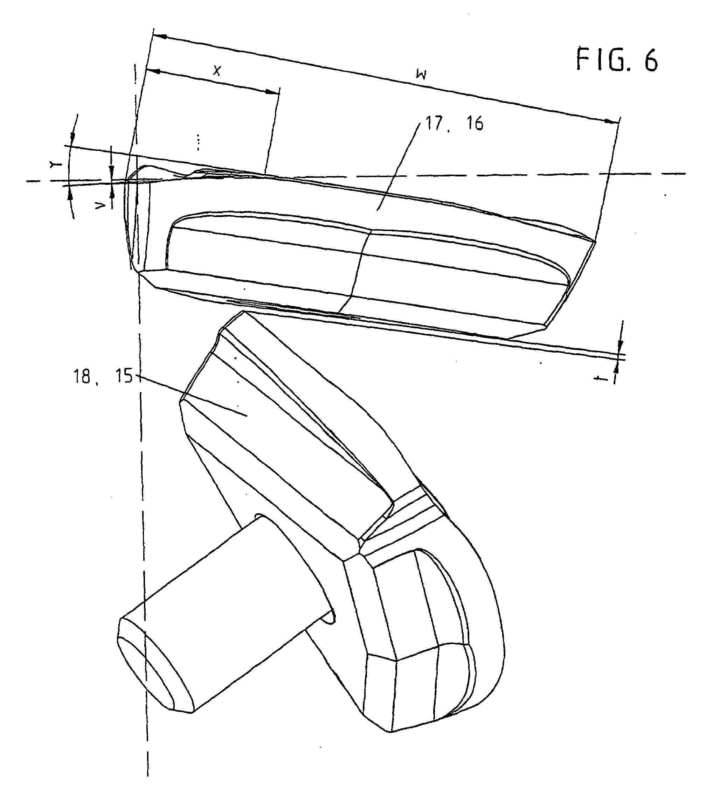

Der Grund für die Schneidkantenabsenkung ist im einzelnen aus Fig. 6 ersichtlich, worin anhand der Schneideinsätze 17, 16 deren räumliche Lage in bezug auf die Zentrumsachse (Fräserängschse) dargestellt ist. Der in der Draufsicht auf die Freifläche beschriebene Krümmungsverlauf der Schneidkante ergibt sich aus der Anforderung, daß der Schneidbereich im Zentrum untermittig liegen soll und gleichzeitig ein maximaler Abstand zu der nächstliegenden Wendeschneidplatte 15, 18 gewählt werden soll. Der untermittig gewählte Abstand v der abgesenkten Schneidecke beträgt bis zu 0,3 mm, das Abstandsmaß t, das räumlich zu verstehen ist, ist größer als 1 mm. Aus Vorbeschriebenem folgt, daß die konvex gekrümmten Schneidkanten 19 und 20 auch in einer Draufsicht auf die Freifläche zumindest in den eckennahen Bereichen konvex gekrümmt sind.

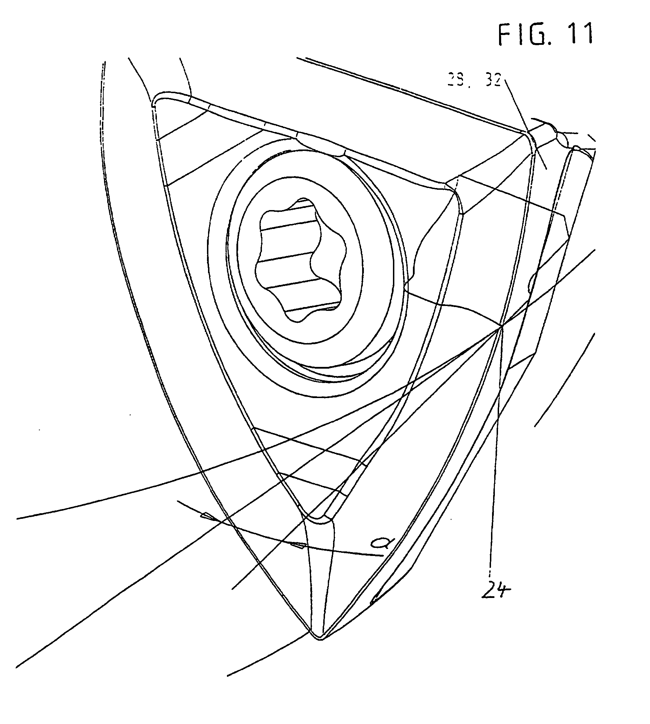

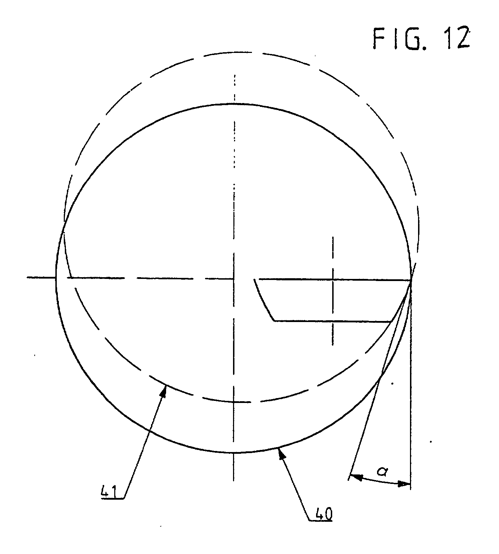

Die Gestaltung der Freiflächenbereiche 28, 32, die unmittelbar unterhalb der Schneidkanten 14, 19 und 20 liegen, ist Fig. 11 zu entnehmen. Am Schneidkantenpunkt 24 ergibt sich ein gewählter Freiflächenwinkel α der im Querschnitt kreisrunden Freiflächenbereiche 28 bzw. 32. Wie aus Fig. 12 ersichtlich, beschreibt jeder Schneidkantenpunkt einen Kreisbogen 40 beim Zerspanen. Der betreffende Freiflächenverlauf unterhalb dieses Schneidkantenpunktes wird dadurch geschaffen, daß der Kreisbogen 40 um das gewünschte Freiwinkelmaß α zu einem Kreisbogen 41 verschwenkt wird, der dann im Anschluß an die Schneidkante die Freiflächenkontur unterhalb dieses Schneidkantenpunktes 24 bestimmt. Je nach Lage der Schneidkantenpunkte bezogen auf die Fräserlängsachse 12 ergeben sich somit unterschiedlich gekrümmte Freiflächenbereiche unterhalb der betreffenden Schneidkanten.

Die darunterliegenden Anlageflächen 35 bzw. 31 sind unter einem Freiwinkel zwischen 5° bis 25°, vorzugsweise 10° bis 15°, angeordnet. Die Fase 25, 26 und 27 ist als umlaufende Fase ausgebildet und besitzt eine Breite von 0,1 mm sowie einen Fasenwinkel von 10°.

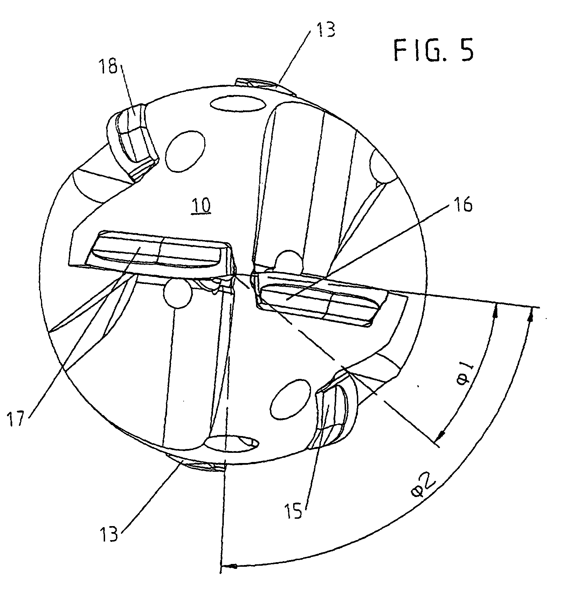

Zusätzlich zeigt Fig. 5 noch die räumliche Anordnung der Schneideinsätze 13 und 15 bis 18 in dem Werkzeugträger 10. Die jeweiligen Schneideinsätze 13 sowie die Schneideinsätze 15 und 18 und 16 und 17 sind diametral gegenüberliegend angeordnet, wobei die dargestellten Winkelmaße ϕ₁ und ϕ₂ im vorliegenden Anwendungsfall 35° bzw. 85° betragen. Diese Winkelmaße geben die Winkel zwischen den jeweiligen Schneidkantenebenen der benachbarten bzw. übernächsten Schneideinsätze an.

## Patentansprüche

1. Schneideinsatz mit drei effektiv nutzbaren, eine Spanfläche begrenzenden Schneidkanten (14, 19, 20), jeweiligen Freiflächen und einer Auflagefläche,
**dadurch gekennzeichnet,**
**daß** zwei der Schneidkanten (19, 20) über ihre in Draufsicht auf die Spanfläche betrachteten Länge konvex gekrümmt sind und die dritte Schneidkante (14) in Draufsicht auf die Spanfläche betrachtet geradlinig ausgebildet ist.

2. Schneideinsatz nach Anspruch 1, **dadurch gekennzeichnet, daß** die konvexen Schneidkanten (19, 20) über ihre gesamte effektive Länge einen gleich großen Krümmungsradius aufweisen und/oder daß die Länge der gekrümmten Schneidkanten (19, 20) einem Winkelmaß von 40° bis 52°, vorzugsweise bis 48°, entspricht bzw. einem Bogenmaß (a, b) zwischen π · D/7 bis π · D/9 mit D = Kugelkopfdurchmesser.

3. Schneideinsatz nach einem der Ansprüche 1 oder 2, **dadurch gekennzeichnet, daß** die Länge der gekrümmten Schneidkanten (19, 20) unterschiedlich groß ist, wobei vorzugsweise die kürzere Schneidkante (20) einem Winkelmaß von 45° entspricht und/oder die längere Schneidkante (19) einem Winkelmaß von 48° entspricht.

4. Schneideinsatz nach einem der Ansprüche 1 bis 3, **dadurch gekennzeichnet, daß** die Schneidkanten (14, 19, 20) in einer Draufsicht auf die Freifläche betrachtet zu den Schneideinsatzecken (23) hin abfallen, vorzugsweise unter einem gegenüber der Basisfläche gemessenen tangentialen Neigungswinkel (γ) von bis zu 40°, wobei der Bereich (x), über dem die Schneidkante (14, 19, 20) zu den Schneideinsatzecken hin abfällt, 1/3 bis 1/9 der Schneidkantenbreite (w) ist oder die Schneidkante (14, 19, 20) zumindest an ihrem Ende in einer Draufsicht auf die Freifläche konvex gekrümmt ist, vorzugsweise unter einem Krümmungsradius zwischen 1 mm und 5 mm.

5. Schneideinsatz nach einem der Ansprüche 1 bis 4, **gekennzeichnet durch** ein auf der Spanfläche zentral angeordnetes erhabenes Plateau (21) und/oder **durch** eine ringsum laufende Stützfase (25, 26, 27), die vorzugsweise unter einem Winkel von 0° bis 20° zur Spanplateauebene geneigt ist und/oder die eine Breite zwischen 0,05 mm bis 0,25 mm besitzt.

6. Kugelkopffräser mit einem einen Schaft aufweisenden Werkzeugträger (10) mit mehreren Plattensitzen zur Aufnahme und Befestigung jeweiliger Schneideinsätze (11), die an dem Werkzeugträger (10) derart angeordnet sind, daß sie bei Drehung des Werkzeugträgers (10) um seine Längsachse (12) mit ihren aktiven Schneidkanten eine Rotationfläche beschreiben, die einer Halbkugel und einer hieran angrenzenden, den Fräsdurchmesser (D) bestimmenden Zylinderflächen entspricht, wobei sich die von den Schneidkanten benachbarter Schneideinsätze beschriebenen Zerspanungsflächen teilweise überlappen, **dadurch gekennzeichnet, daß** auf gegenüberliegenden Seiten des Werkzeugträgers (10) jeweils drei in einer Reihe nebeneinander angeordnete Schneideinsätze (13, 15, 16; 13, 17, 18) nach einem der Ansprüche 1 bis 5 unter einem positiven Freiwinkel vorgesehen sind, von denen zwei nebeneinanderliegende Schneideinsätze (15, 16; 17, 18) jeweils eine aktive gleichmäßig gekrümmte Schneidkante (19, 20) besitzt, die einen Winkel zwischen 40° und 52° abdeckt, und daß der dritte hierneben angeordnete Schneideinsatz (13) eine aktive gerade Schneidkante (14) besitzt.

7. Kugelkopffräser nach Anspruch 6, **dadurch gekennzeichnet, daß** die Schneideinsätze unter einem Axialwinkel (γₐ₁ bis γₐ₃) von 0° bis 15° angeordnet sind, wobei vorzugsweise der an der Werkzeugspitze angeordnete Schneideinsatz (16, 17) unter einem Axialwinkel (γₐ₁) bis zu 10° angeordnet ist.

8. Kugelkopffräser nach einem der Ansprüche 6 oder 7, **dadurch gekennzeichnet, daß** einer der an der Werkzeugspitze angeordneten Schneideinsätze (16) mit seiner Schneidkante (19) über die Fräserlängsachse (12) geringfügig hinausgehend übersteht und der auf der gegenüberliegenden Seite liegende Schneideinsatz (17) einen geringfügigen Abstand zur Fräserlängsachse (12) hat.

9. Kugelkopffräser nach Anspruch 8, **dadurch gekennzeichnet, daß** für alle sechs in dem Werkzeugträger eingespannten Schneideinsätze solche nach einem der Ansprüche 1 bis 16 verwendet werden, wobei vorzugsweise bei dem mit seiner Schneidkante (19) geringfügig über die Fräserlängsachse (12) hinausragenden Schneideinsatz (16) hierzu die längere der beiden gekrümmten Schneidkanten (19) als aktive Schneidkante eingesetzt wird und bei dem auf der gegenüberliegenden Seite an der Werkzeugspitze angeordneten Schneideinsatz (17) die kürzere der beiden gekrümmten Schneidkanten (20) als aktive Schneidkante eingesetzt wird, wobei vorzugsweise das Schneidkantenende, das geringfügig über die Fräserlängsachse (12) hinausragt, zu der Ebene, in der der vorderste Punkt der Schneidkante des zentral angeordneten Schneideinsatzes liegt und die senkrecht zur Fräserlängsachse (12) angeordnet ist, einen Abstand (v) von bis zu 0,3 mm besitzt.

10. Kugelkopffräser nach einem der Ansprüche 6 bis 9, **dadurch gekennzeichnet, daß** der Bereich, mit dem sich die Zerspanungsflächen benachbarter Schneideinsätze überlappen, bis zu 0,3 mm breit ist.

## Claims

1. Cutting insert with three effectively useable cutting edges (14, 19, 20) bordering a rake face, the corresponding clearance faces and one supporting area,
**characterised in that**
two of the cutting edges (19, 20) have a convex curve across their length when looked at in top view to the rake face and the third cutting edge (14) is designed straight when looked at in top view to the rake face.

2. Cutting insert as claimed in claim 1, **characterised in that** the convex cutting edges (19, 20) comprise the same curvature radius across their whole effective length and/or that the length of the curved cutting edges (19, 20) corresponds with a measure of angle of 40° to 52°, preferably to 48°, resp. a measure (a, b) of arc between π. D/7 to π . D/9 with D = ball end diameter.

3. Cutting insert as claimed in any one of the claims 1 to 2, **characterised in that** the length of the curved cutting edges (19,20) varies, wherein preferably the shortest cutting edge (20) corresponds with an angular measurement of 45° and/or the longer cutting edge (19) corresponds with an angular measurement of 48°.

4. Cutting insert as claimed in any one of the claims 1 to 3, **characterised in that** the cutting edges (14, 19,20) when looked at in a top view to the clearance faces, are inclined towards the cutting insert comers (23), preferably at a tangential cutting edge inclination (y) of up to 40° measured against the base, where the area (x), across which the cutting edge (14, 19, 20) inclines down to the cutting insert edges, is 1/3 to 1/9 of the cutting edge width (w) or the cutting edge (14, 19, 20) is convexly curved at least at its end in a top view onto the clearance face, preferably at a curvature radius between 1 mm and 5 mm.

5. Cutting insert as claimed in any one of the claims 1 to 4, **characterised by** a raised plateau (21) arranged centrally on the rake face and/or by a circumferential support groove (25, 26, 27) which is preferably inclined at the angle of 0° to 20° to the rake face plateau level and/or which comprises a width between 0.05mm and 0.25 mm.

6. Ball end mill with a tool holder (10) comprising a shaft with multiple plate fits to mount and fasten corresponding cutting inserts (11) which are arranged on the tool holder (10) in such a manner that, when rotating the tool support (10) around its longitudinal axis (12), they describe a rotational surface with their active cutting edges which corresponds with a semi-sphere and a bordering cylindrical surface which determines the milling diameter (D), where the milled surfaces described by the cutting edges of neighbouring cutting inserts overlap in part, **characterised in that**, on opposite sides of the tool holder (10) three each cutting inserts arranged in series (13, 15, 16; 13, 17, 18) according to any one of the claims 1 to 5, are provided at a positive clearance angle, of which two neighbouring cutting inserts (15, 16; 17, 18) each comprise an active, regularly curved cutting edge (19,20), which covers an angle between 40° and 52° , and that the third cutting insert (13) arranged next to these, comprises an active straight cutting edge (14).

7. Ball end mill as claimed in claim 6, **characterised in that** the cutting inserts are arranged at an axial angle (yₐ₁ to yₐ₃) of 0° to 15°, where preferably the cutting insert (16, 17) arranged at the tool tip is arranged at an axial angle (yₐ₁) of up to 10°.

8. Ball end mill as claimed in any one of the claims 6 or 7, **characterised in that** one of the cutting inserts (16) arranged at the tool tip slightly projects over the longitudinal axis of the mill (12) with its cutting edge (19), and that the cutting insert (17) positioned on the opposite side has a marginal distance to the longitudinal axis of the mill (12).

9. Ball end mill as claimed in claim 8, **characterised in that** for all six cutting inserts clamped in the tool holder, inserts as claimed in any one of the claims 1 to 16 area used, where preferably for the cutting insert (16) whose cutting edge (19) slightly projects over the longitudinal axis of the mill (12) the longer of the two curved cutting edges (19) is used as the active cutting edge and for the cutting insert (17) arranged at the opposite side at the tool tip, the shorter of the two curved cutting edges (20) is used as active cutting edge, and where preferably the cutting edge end, which marginally projects over the longitudinal axis of the mill (12), has a distance (v) of up to 0.3 mm to the plane, in which the leading point of the cutting edge of the centrally arranged cutting insert lies and which is arranged vertical to the longitudinal axis of the mill (12).

10. Ball end mill as claimed in any one of the claims 6 to 9, **characterised in that** the area, with which the milled surfaces described by neighbouring cutting inserts overlap, is up to 0.3 mm wide.

## Revendications

1. Insert de coupe avec trois tranchants (14, 19, 20) effectivement utilisables qui limitent une face de coupe, avec des faces de dépouilles respectives et avec une surface de support,
**caractérisé par le fait**
**que** deux des tranchants (19, 20) sont courbés de façon convexe sur leur longueur vue dans une vue de dessus sur la face de coupe, et que le troisième tranchant (14) est, dans une vue de dessus sur la face de coupe, réalisé de façon rectiligne.

2. Insert de coupe selon la revendication 1, **caractérisé par le fait que** les tranchants convexes (19, 20) présentent un rayon égal de courbure sur l'ensemble de leur longueur effective, et/ou que la longueur des tranchants courbés (19, 20) correspond à une mesure angulaire de 40° à 52°, de préférence à 48°, ou bien à une mesure d'arc (a, b) entre π·*D*/7 à π·*D*/9 avec D = diamètre de la tête sphérique.

3. Insert de coupe selon l'une des revendications 1 ou 2, **caractérisé par le fait que** la longueur des tranchants courbés (19, 20) est différente, de préférence le tranchant (20) plus court correspondant à une mesure angulaire de 45° et/ou le tranchant (19) plus long correspondant à une mesure angulaire de 48°.

4. Insert de coupe selon l'une des revendications 1 à 3, **caractérisé par le fait que**, vus dans une vue de dessus sur la face de dépouille, les tranchants (14, 19, 20) descendent vers les coins (23) de l'insert de coupe, de préférence sous un angle tangentiel d'inclinaison (y) - mesuré par rapport à la surface de base - allant jusqu'à 40°, la zone (x) sur laquelle le tranchant (14, 19, 20) descend vers les coins de l'insert de coupe, faisant entre 1/3 et 1/9 de la largeur (w) du tranchant, ou le tranchant (14, 19, 20) étant, dans une vue de dessus sur la face de dépouille, courbé de façon convexe au moins à son extrémité, de préférence sous un rayon de courbure compris entre 1 mm et 5 mm.

5. Insert de coupe selon l'une des revendications 1 à 4, **caractérisé par** un plateau élevé (21) disposé de façon centrale sur la face de coupe et/ou par un chanfrein d'appui (25, 26, 27) qui s'étend tout autour, qui, de préférence, est incliné sous un angle de 0° à 20° par rapport au plan du plateau de face de coupe et/ou qui présente une largeur comprise entre 0,05 mm et 0,25 mm.

6. Fraise à tête sphérique avec un porte-outil (10) présentant une tige et comprenant plusieurs logements de plaquette destinés à recevoir et à fixer des inserts de coupe (11) respectifs qui sont disposés sur le porte-outil (10) de telle manière que, lors d'une rotation du porte-outil (10) autour de son axe longitudinal (12), ils décrivent avec leurs tranchants actifs une surface de rotation qui correspond à un hémisphère et à une surface cylindrique y contiguë qui détermine le diamètre de fraisage (D), les surfaces fraisées décrites par les tranchants d'inserts de coupe voisins chevauchant en partie, **caractérisée par le fait que**, sur des côtés opposés du porte-outil (10), sont prévus respectivement trois inserts de coupe (13, 15, 16 ; 13, 17, 18) selon l'une des revendications 1 à 5, qui sont disposés l'un à côté de l'autre à la ligne et sous un angle positif de dépouille, dont deux inserts de coupe (15, 16 ; 17, 18) situés l'un à côté de l'autre présentent respectivement un tranchant actif régulièrement courbé (19, 20) qui couvre un angle compris entre 40° et 52°, et que le troisième insert de coupe (13) disposé à côté possède un tranchant (14) actif droit.

7. Fraise à tête sphérique selon la revendication 6, **caractérisée par le fait que** les inserts de coupe sont disposés sous un angle axial (γₐ₁ à γₐ₃) compris entre 0° et 15°, de préférence l'insert de coupe (16, 17) qui est disposé sur la pointe de l'outil étant disposé sous un angle axial (γₐ₁) allant jusqu'à 10°.

8. Fraise à tête sphérique selon l'une des revendications 6 ou 7, **caractérisée par le fait que** l'un (16) des inserts de coupe qui sont disposés sur la pointe de l'outil, dépasse avec son tranchant (19) légèrement l'axe longitudinal (12) de la fraise et que l'insert de coupe (17) disposé sur le côté opposé présente une légère distance par rapport à l'axe longitudinal (12) de la fraise.

9. Fraise à tête sphérique selon la revendication 8, **caractérisée par le fait que** pour tous les six inserts de coupe serrés dans le porte-outil, on utilise des inserts de coupe tels qu'ils sont définis dans l'une des revendications 1 à 5, de préférence, dans l'insert de coupe (16) dont le tranchant (19) dépasse légèrement l'axe longitudinal (12) de la fraise, le tranchant plus long des deux tranchants courbés (19) étant utilisé en tant que tranchant actif et, dans l'insert de coupe (17) disposé sur le côté opposé sur la pointe de l'outil, le tranchant plus court des deux tranchants courbés (20) étant utilisé comme tranchant actif, de préférence l'extrémité de tranchant qui dépasse légèrement l'axe longitudinal (12) de la fraise présentant une distance (v) allant jusqu'à 0,3 mm par rapport au plan dans lequel est situé le point le plus avancé du tranchant de l'insert de coupe disposé de manière centrale et lequel est disposé verticalement à l'axe longitudinal (12) de la fraise.

10. Fraise à tête sphérique selon l'une des revendications 6 à 9, **caractérisée par le fait que** la zone avec laquelle les surfaces fraisées d'inserts de coupe voisins chevauchent présente une largeur allant jusqu'à 0,3 mm.
